# EUROPÄISCHE PATENTSCHRIFT

(11) **EP 3 010 653 B1**
(45) Veröffentlichungstag und Bekanntmachung des Hinweises auf die Patenterteilung: **09.03.2022**
(21) Anmeldenummer: 14727791.7
(22) Anmeldetag: 26.05.2014
(51) Int. Cl.: G01S 15/931, G01S 7/521, B06B 1/06, G10K 11/00, G10K 9/22

(54) **ELEKTROAKUSTISCHER WANDLER**
ELECTROACOUSTIC TRANSDUCER
CONVERTISSEUR ÉLECTROACOUSTIQUE

(30) Priorität: 20.06.2013 DE 102013211627
(43) Veröffentlichungstag der Anmeldung: 27.04.2016
(73) Patentinhaber: Robert Bosch GmbH, 70442 Stuttgart (DE)
(72) Erfinder: BARTYLLA, David, 71229 Leonberg (DE); GERLACH, Andre, 71229 Leonberg-Hoefingen (DE)
(86) Internationale Anmeldenummer: PCT/EP2014/060758
(87) Internationale Veröffentlichungsnummer: WO 2014/202332

(56) Entgegenhaltungen:
- EP-A1- 0 031 614
- EP-A1- 2 591 864
- WO-A1-2011/090484
- US-A- 3 995 179
- US-A- 4 780 639
- US-A- 5 351 375
- US-A- 5 630 420
- US-A- 5 648 942
- US-A1- 2007 091 719
- US-A1- 2011 006 641
- US-B1- 6 467 138

## Beschreibung

Die vorliegende Erfindung geht aus von einem elektroakustischen Wandler gemäß dem Oberbegriff des Anspruchs 1.

### Stand der Technik

Aus der DE 10 2009 040 264 A1 ist eine Vorrichtung zur Erzeugung von Ultraschallwellen für ein Fahrzeug bekannt, in der ein länglicher Ultraschallwandler zur Erzeugung von Dickenschwingungen an ein flächiges Bauteil eines Fahrzeugs, insbesondere eine Stoßstange, gekoppelt ist. Der Ultraschallwandler umfasst dabei eine Folge von Piezoscheiben und Kontaktier- und Isolierschichten, wobei die Länge der Piezoscheiben auf die gewünschte Ultraschallwellenfrequenz in Luft abgestimmt ist. Die Piezoscheiben sind aus einem Piezokeramikfaser-Verbundstoff ausgestaltet, der parallel zur Mittelachse der jeweiligen Piezoscheibe oder parallel zur Längsachse verlaufende Fasern umfasst. Die Anordnung von Piezoscheiben ist weiterhin in einer Abstützvorrichtung angeordnet. Diese Anordnung ist wiederum am Stoßfänger angebracht.

In der DE 10 2005 037 724 A1 ist ein Ultraschall-Wandler mit einem zwischen zwei Elektroden angeordneten piezoelektrischen Wandler-Körper beschrieben. Der Wandler-Körper weist mindestens zwei Volumen-Bereiche aus piezoelektrischem Halbleiter-Material auf, die durch eine Grenzschicht der Höhe h' voneinander getrennt sind. Es ist ein gitterförmiger Aufbau mit stabförmigen Wandler-Segmenten gezeigt, in dem einer der Bereiche stabförmig ausgestaltet ist. Mit der beschriebenen Ausgestaltung soll ein Ultraschall-Wandler mit einer kurzen Abklingzeit und einem verschwenkbaren Strahl realisiert werden.

Aus der DE 10 2008 018 110 A1 geht ein Ultraschallsensor hervor, der ein Piezokeramik-Element aufweist, das einen Stoßfänger zum Schwingen anregt und innerhalb eines Piezokeramik-Moduls vorgesehen ist. Das Modul ist dabei von außen nicht sichtbar in den Stoßfänger integrierbar. Zusätzlich wird eine Verrippung um das Piezokeramik-Modul herum ausgebildet, so dass die Steifigkeit des Stoßfängers in diesem Bereich veränderbar ist und der mechanische Impedanzsprung zwischen den Stoßfängerbereichen einstellbar ist.

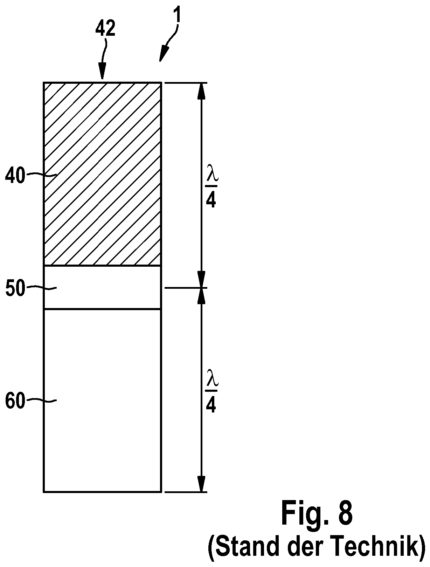

Die WO 2011/090484 A1 beschreibt einen Ultraschallwandler in Form eines Dickenschwingers. Ausgehend von einer scheibenförmigen Piezokeramik mit Elektroden ist mindestens ein Vorderkörper vorgesehen, der eine Form aufweist, so dass eine gewünschte Abstrahlcharakteristik entsteht. Die Länge des Übertragungsweges entspricht λ/4 bei einer Resonanzfrequenz fR, so dass eine Verstärkung der Vibration ausgehend von der Piezokeramikscheibe an der abstrahlenden Oberfläche erreicht wird. Ferner ist beschrieben, dass für manche Anwendungen bevorzugt ein λ/2-Schwinger verwendet wird, welcher insbesondere hinsichtlich Temperaturstabilität, Verschmutzungsanfälligkeit und Ablagerungen robuster ist. Ein derartiger Der λ/2-Schwinger 1 ist in Figur 8 dargestellt. Er weist einen Vorderkörper 40 und einen Rückkörper 60 auf, wobei die Länge jeweils des Vorder- und Rückkörpers plus der Hälfte der Dicke der Piezokeramikscheibe 50 einem Viertel der Wellenlänge λ der Resonanzschwingung entspricht. Der Vorteil bei derartigen Wandlern besteht darin, dass sie als Sensoren zur Erfassung einer Umgebung eines Fahrzeugs oder eines Roboters eingesetzt werden können und dabei von außen unsichtbar in Karosserieteile des Fahrzeugs, beispielsweise den Stoßfänger oder in einen Verkleidungsteil des Roboters integriert werden können.

Aus der US 2007/0091719 A1 ist eine Anordnung von mehreren Ultraschallwandlern bekannt, bei welcher die Piezokeramischen Elemente in einer hydrophonen Einrichtung in einem Hohlraum befestigt sind. Zur Lagerung ist hierbei ein Material vorgesehen, welches die Querausdehnung des Piezoelements ermöglicht.

Die US 5 648 942 A beschreibt eine Lagerstruktur für einen Ultraschallwandlerarray, wobei diese Lagerstruktur stäbchenförmig ausgebildet ist. Die Lagerstruktur besteht aus zwei unterschiedlichen Materialien, welche bestimmte elektrische und akustische Eigenschaften besitzen. Hierdurch kann die Übertragung der im Wandler erzeugten Signale an die entsprechenden Verarbeitungseinheiten gesteuert werden.

Die Dokumente US 3 995 179 A und US 5 351 375 A beschreiben elektrostatische Wandler, die zumindest Teile des Oberbegriffs des Anspruchs 1 aufweisen.

Ein aus dem Stand der Technik bekannter λ/2-Dickenschwinger 1, wie er in Figur 8 dargestellt ist hat den Nachteil, dass dieser sehr lang ist. Wird die Länge halbiert, um mit einem λ/4-Dickenschwinger zu senden bzw. zu empfangen, muss die dem Vorderkörper gegenüberliegende Fläche der Piezokeramikscheibe mit einem Sensorgehäuse oder einer Haltestruktur verbunden werden. Wird die Piezokeramik dazu flächig auf einen Untergrund geklebt oder anderweitig flächig befestigt, so behindert dies die Querkontraktion der Piezokeramikscheibe, wodurch die Sensitivität des Wandlers verringert ist.

### Offenbarung der Erfindung

Es ist somit die Aufgabe der Erfindung einen elektroakustischen Wandler anzugeben, der die vorteilhaften Eigenschaften eines λ/4-Dickenschwinger bezüglich der Länge, also der Baugröße aufweist, und dessen Sensitivität dennoch der eines λ/2-Dickenschwinger entspricht oder dieser zumindest nahe kommt. Es soll erfindungsgemäß eine Behinderung der Querkontraktion des piezoelektrischen Elements verhindert werden.

Diese Aufgabe wird durch einen elektroakustischen Wandler mit den Merkmalen des Anspruchs 1 gelöst.

Es ist ein elektroakustischer Wandler vorgesehen, der ein Gehäuse, eine schwingende Struktur umfassend mindestens ein scheibenförmiges piezoelektrisches Element mit einer ersten und einer zweiten Oberfläche und einen akustischen Übertrager (auch als Vorderkörper bezeichnet) umfasst. Zur Ansteuerung des piezoelektrischen Elements sind elektrische Verbindungsmittel vorgesehen, die mit Elektroden des piezoelektrischen Elements verbunden sind. Der erfindungsgemäße Wandler funktioniert nach dem bekannten Prinzip. Wenn der Wandler als Sender betrieben wird, wird das piezoelektrische Element zu Schwingungen angeregt, die sich auf den Vorderkörper übertragen und als Schallwellen abgestrahlt werden. Wird der Wandler als Empfänger betrieben, werden eintreffende Schallwellen durch das piezoelektrische Element in elektrische Signale umgewandelt. Der Vorderkörper verbindet die Fläche des Schallempfanges mit dem piezoelektrischen Element und wirkt damit als akustischer Übertrager. Durch die resonante Auslegung des Bauteilverbundes wird die die erzeugte Schwingung verstärkt.

Der akustische Übertrager weist eine erste Oberfläche und eine zu der ersten Oberfläche parallele zweite Oberfläche auf. Er ist bevorzugt stabartig ausgebildet und kann beispielsweise eine zylindrische oder rechteckige Form aufweisen. Die erste Oberfläche des akustischen Übertragers ist mit der ersten Oberfläche des piezoelektrischen Elements verbunden. Die zweite, der ersten gegenüberliegende, Oberfläche des akustischen Übertragers ist geeignet, Schallwellen abzustrahlen oder zu empfangen. Der Abstand zwischen der zweiten Oberfläche des akustischen Übertragers und der zweiten Oberfläche des piezoelektrischen Elements entspricht im Wesentlichen ¼ der Wellenlänge (λ/4) einer Resonanzschwingung der schwingenden Struktur. Die schwingende Struktur stellt demnach einen sogenannten λ/4-Dickenschwinger dar, wie er aus dem Stand der Technik bekannt ist. Die Schwingung erfolgt hauptsächlich in einer Richtung senkrecht zur Oberfläche des piezoelektrischen Elements (Dickenschwingung). Beim Empfangen von akustischen Schwingungen werden demnach Kräfte auf das piezoelektrische Element ausgeübt, die eine Längs- und Querdehnung des piezoelektrischen Elements verursachen. Eine Behinderung dieser Querdehnung würde zu einer Verringerung der Sensitivität des Wandlers führen.

Erfindungsgemäß ist daher vorgesehen, dass das piezoelektrische Element, beispielsweise über seine zweite Oberfläche, mittels einer Lagerstruktur mit dem Gehäuse verbunden ist, wobei die Lagerstruktur ausgebildet ist, Querdehnungen des piezoelektrischen Elements zu ermöglichen. Mit anderen Worten wird eine sichere mechanische Befestigung der schwingenden Struktur in dem Gehäuse erzielt, ohne dass Querdehnungen bzw. Querkontraktionen des piezoelektrischen Elements durch die Befestigung beeinträchtigt werden.

Erfindungsgemäß umfasst die Lagerstruktur dazu mehrere stäbchenförmige, Abstützelemente, die sich zwischen der zweite Oberfläche des piezoelektrischen Elements und einer Innenfläche des Gehäuses erstrecken. Die Abstützelemente können beispielsweise ein Keramikmaterial oder ein Metall aufweisen. Bevorzugt sind Materialien mit hoher Steifigkeit (d.h. hohem Elastizitätsmodul), um eine steife Abstützung des Schwingers zu ermöglichen, beispielsweise eine Aluminiumoxid-Keramik oder Stahl. Es ist jedoch auch möglich, Materialien mit geringerer Steifigkeit (z. B. Aluminium oder Messing) einzusetzen, sofern dies bei der Dimensionierung der schwingenden Struktur geeignet berücksichtigt wird. Die Abstützelemente verhindern erfindungsgemäß eine Verschiebung der schwingenden Struktur in Dickenrichtung und ermöglichen erfindungsgemäß durch ihre geringe Steifigkeit in Querrichtung eine Querdehnung des piezoelektrischen Elements. Dies wird bevorzugt dadurch erreicht, in dem die Abstützelemente in Stabform ausgebildet werden, also im Vergleich große Längsabmessungen und kleine Abmessungen in Querrichtung besitzen. Die Abmessungen in Querrichtung können beispielsweise ca. 1/4 bis 1/200 der Querabmessung des piezoelektrischen Elements annehmen. Durch solche Abmessungen wird eine geringe Steifigkeit der Abstützelemente in Querrichtung erreicht. Die Abstützelemente folgen der Querbewegung des piezoelektrischen Elements mit geringer Gegenkraft. Somit wird durch die Stäbchenform in vorteilhafter Weise der erfindungsgemäße Effekt erzielt, dass eine Querdehnung des piezoelektrischen Elements möglichst wenig behindert wird.

Die stäbchenförmigen Abstützelemente sind bevorzugt in ihrer Längserstreckung parallel zueinander angeordnet und weisen jeweils einen Querschnitt auf, der wesentlich kleiner ist als die Oberfläche des piezoelektrischen Elements. Bevorzugt sind die Abstützelemente im Wesentlichen identisch zueinander ausgebildet. Es können jedoch auch Abstützelemente vorgesehen sein, die unterschiedlich zueinander ausgebildet sind, indem beispielsweise die Form und/oder der Querschnitt und/oder das Material von mindestens zwei Abstützelementen unterschiedlich ausgebildet sind.

Besonders bevorzugt ist eine Ausführung der Erfindung, bei der die Abstützelemente mit einem insbesondere nachgiebigen oder elastischen, Füllmaterial ummantelt oder in ein derartiges Füllmaterial eingebettet sind. Das Material kann beispielsweise ein Polymer oder einen Schaum, beispielsweise den Zweikomponenten-Silikonschaum Fermasil (Firma Sonderhoff) oder ein Epoxy-Material umfassen. Durch das Ummanteln mit einem derartigen Füllmaterial ist es fertigungstechnisch einfacher, eine regelmäßige Anordnung der Abstützelemente zu erzielen.

Bevorzugt ist eine Ausbildung der Erfindung, bei der die Abstützelemente einteilig mit dem piezoelektrischen Element ausgebildet sind. Beispielsweise können die Abstützelemente bereits bei der Fertigung des piezoelektrischen Elementes ausgebildet werden. Somit wird ein Befestigungsschritt bei der Montage des erfindungsgemäßen elektroakustischen Wandlers eingespart und der Aufbau insgesamt vereinfacht. Bevorzugt sind die Abstützelemente mittels eines elektrisch leitfähigen Klebstoffs mit dem Gehäuse verbunden sind. Dies erlaubt die direkte Kontaktierung des piezoelektrischen Elements.

In einer alternativen Ausführung der Erfindung wird die Lagerstruktur ausgebildet, indem die Abstützelemente auf einem Basiselement angeordnet werden oder einteilig mit dem Basiselement ausgebildet sind. Da Basiselement ist an dem Gehäuse des elektroakustischen Wandlers befestigt, beispielsweise durch Kleben. Auch durch diese Ausführung wird die Montage des elektroakustischen Wandlers vereinfacht.

In einer anderen alternativen Ausführung der Erfindung ist vorgesehen, dass die Abstützelemente selbst ein piezoelektrisches Material, insbesondere ein Piezokeramikmaterial, aufweisen. Es wird eine Anordnung aus parallel ausgerichteten derartigen Abstützelementen vorgesehen, wobei die Anordnung aus piezoelektrisch aktiven Abstützelementen das erfindungsgemäß vorgesehene piezoelektrische Element des elektroakustischen Wandlers ausbildet. Jedes einzelne Abstützelement wirkt als separates Piezoelement, wobei jedes der Abstützelemente bevorzugt stäbchenförmig ausgebildet ist und die Abstützelemente zueinander parallele Stirnflächen aufweisen. Zur Ausbildung eines derartigen piezoelektrischen Elements können die einzelnen Abstützelemente in ein nachgiebiges Material, wie zum Beispiel einen Schaum oder ein Polymer eingebettet werden. Jeweils eine erste Stirnfläche jedes Abstützelementes ist mit der ersten Oberfläche des akustischen Übertragers verbunden. Die jeweilige zweite Stirnfläche jedes Abstützelements ist mit dem Gehäuse verbunden ist. Der Vorteil dieser Ausführung liegt darin, dass keine separate Lagerstruktur benötigt wird. Die die Zahl der Bauteile des elektroakustischen Wandlers wird damit weiter verringert und die Baugröße reduziert. Zur elektrischen Kontaktierung des piezoelektrischen Elements können die elektrischen Verbindungsmittel an den Stirnflächen der Abstützelemente kontaktiert sein oder alternativ an gegenüberliegenden Seitenflächen der Abstützelemente kontaktiert sein. Ein ähnlicher Aufbau eines piezoelektrischen Elements ist von sogenannten Composite-Piezokeramiken bekannt, wobei jedoch im Gegensatz zur vorliegenden Erfindung bei den bekannten Composite-Piezokeramiken die piezoelektrischen Stäbe direkt als Schwinger zur Schallaussendung oder zum Schallempfang in Bezug auf ein angrenzendes Gebiet (z.B. Luft oder Wasser) wirken und nicht als Abstützelement dienen.

Generell ist es möglich, die die Abstützelemente stäbchenförmig auszubilden, also beispielsweise zylinderförmig, quaderförmig, oder allgemein prismenförmig. Vorteilhaft ist es, die Abstützelemente konisch oder kegelstumpfartig oder pyramiden- oder pyramidenstumpfförmig auszubilden. In diesem Fall ist es vorteilhaft die jeweils kleinere Stirnfläche bzw. die Spitze des Konus oder der Pyramide mit dem piezoelektrischen Element zu verbinden und die größere Stirnfläche, also die Grundfläche der Pyramide, des Pyramidenstumpfs, des Konus oder der Kegelstumpfs, mit dem Gehäuse zu verbinden. Auf diese Weise wird die Querdehnung des piezoelektrischen Elements so geringfügig wie möglich behindert und trotzdem eine haltbare mechanische Verbindung der Abstützelemente zum Gehäuse geschaffen.

Der akustische Übertrager des erfindungsgemäßen elektroakustischen Wandlers kann auf unterschiedliche Weise ausgebildet sein. Beispielsweise kann vorgesehen sein, dass die erste Oberfläche des akustischen Übertragers und die zweite Oberfläche des akustischen Übertragers ungleich groß und/oder ungleich geformt sind. Durch Anpassung des Verhältnisses der Flächen und durch die jeweiligen Formen der Flächen kann die Resonanzfrequenz der schwingenden Struktur beeinflusst werden. Weiterhin kann eine bestimmte Abstrahlcharakteristik der abgestrahlten Schallwellen erzielt werden.

In einer Ausführung der Erfindung ist die erste Oberfläche des akustischen Übertragers im Wesentlichen kreisförmig ausgebildet ist und die zweite Oberfläche des akustischen Übertragers im Wesentlichen rechteckig ausgebildet. Damit wird eine fächerförmige Abstrahlcharakteristik erzielt. Alternativ können die erste und die zweite Oberfläche des akustischen Übertragers beide jeweils im Wesentlichen kreisförmig ausgebildet sein, wobei der Durchmesser der ersten Oberfläche kleiner oder größer ist als der Durchmesser der zweiten Oberfläche.

Weiterhin betrifft die Erfindung eine Anordnung umfassend einen elektroakustischen Wandler nach einer der oben beschriebenen Ausführungen und einem Verkleidungselement eines Fahrzeugs, insbesondere einem Stoßfänger. Die Anordnung ist dadurch charakterisiert, dass der elektroakustische Wandler derart an einer Innenfläche des Verkleidungselements befestigt ist, dass der elektroakustische Wandler von außen unsichtbar ist. Die zweite Oberfläche des akustischen Übertragers ist akustisch an einen Bereich des Verkleidungselements gekoppelt ist, wobei das Verkleidungselement in diesem Bereich eine verringerte Dicke aufweist. Die erfindungsgemäße Anordnung kann beispielsweise als Ultraschallsensor für ein Umfelderfassungssystem des Fahrzeugs eingesetzt werden.

Um eine störende Übertragung der Schwingung des elektroakustischen Wandlers auf das gesamte Verkleidungselement zu vermeiden und stattdessen eine lokalisierte Schwingung auf den Bereich mit verringerter Dicke zu begrenzen, wird vorgeschlagen, dass dieser Bereich eine Dicke von 0,1 bis 10 mm, bei einer Abstrahlfrequenz von 40-100 kHz aufweist.

Bevorzugt wird zur Ausbildung der erfindungsgemäßen Anordnung das Gehäuse des elektroakustischen Wandlers durch Schweißen oder Kleben oder Schrauben an der Innenfläche des Verkleidungselements befestigt.

### Kurze Beschreibung der Zeichnungen

Weitere Aspekte und Vorteile der Erfindung werden nunmehr anhand der beigefügten Figuren eingehender beschrieben.
Figur 1 zeigt schematisch die erfindungsgemäße Anbindung eines λ/4-Dickenschwingers an ein Gehäuse.
Figur 2 zeigt eine erfindungsgemäße Anordnung eines elektroakustischen Wandlers, der auf der Innenseite eines Verkleidungselements eines Fahrzeugs befestigt ist.
Figur 3 zeigt ein Detail eines elektroakustischen Wandlers mit einer Lagerstruktur gemäß einer Ausführung der Erfindung.
Figur 4 zeigt ein Detail eines elektroakustischen Wandlers mit einer nicht erfindungsgemäßen Lagerstruktur.
Figur 5 zeigt ein Detail eines elektroakustischen Wandlers mit einer nicht erfindungsgemäßen Lagerstruktur.
Figur 6 zeigt ein Detail eines elektroakustischen Wandlers mit einer nicht erfindungsgemäßen Lagerstruktur.
Figur 6a zeigt in deiner Detailansicht schematisch eine erste Möglichkeit der Kontaktierung des piezoelektrischen Elements aus Figur 6.
Figur 6b zeigt in deiner Detailansicht schematisch eine erste Möglichkeit der Kontaktierung des piezoelektrischen Elements aus Figur 6.
Figur 7 zeigt ein Detail eines elektroakustischen Wandlers mit einer nicht erfindungsgemäßen Lagerstruktur
Figur 8 zeigt einen λ/2-Dickenschwinger gemäß dem Stand der Technik Ausführungen der Erfindung

Sämtliche aus den Ansprüchen, der Beschreibung oder der Zeichnung hervorgehende Merkmale und/oder Vorteile, einschließlich konstruktiver Einzelheiten und räumlicher Anordnung, können sowohl für sich als auch in den verschiedensten Kombinationen erfindungswesentlich sein.

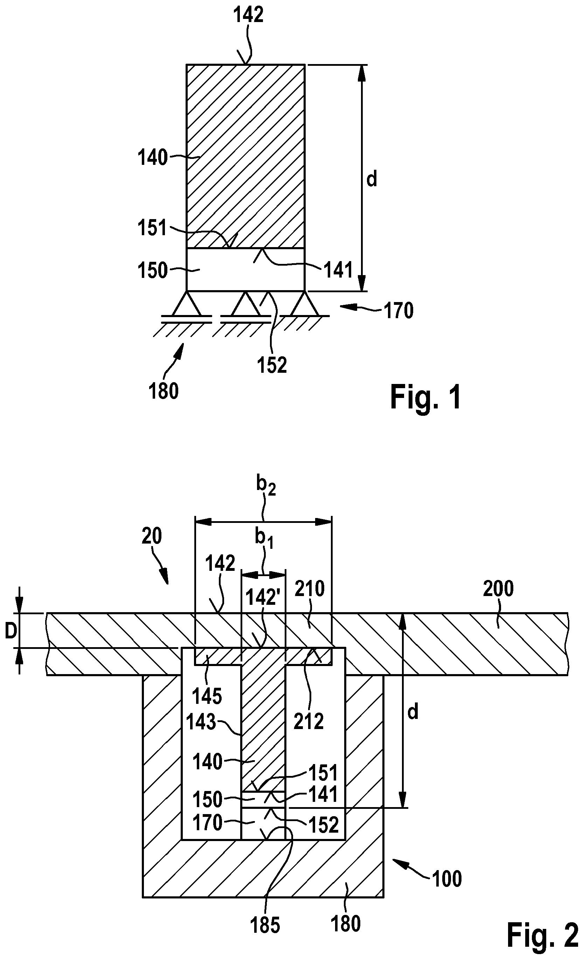

In Figur 1 ist schematisch dargestellt, wie eine als λ/4-Dickenschwinger ausgestaltete schwingende Struktur an einem Gehäuse 180 befestigt ist. Um die Behinderung der Querdehnung der Piezokeramik 150 des λ/4-Dickenschwingers zu verringern, ist erfindungsgemäß eine Lagerung 170 geschaffen, wie sie idealisiert in Figur 1 dargestellt ist. Somit ist die Schwingung in Dickenrichtung behindert, nicht aber die Schwingung in Querrichtung. Die Behinderung der Schwingung in Dickenrichtung ermöglicht die Ausbildung als λ/4-Dickenschwinger mit dem damit verbundenen Vorteil der kurzen Bauform.

Ein Ausführungsbeispiel der Erfindung ist in Abbildung 2 dargestellt. Figur 2 zeigt eine Anordnung eines elektroakustischen Wandlers 100 an der Innenseite eines Stoßfängers 200 eines Fahrzeugs. Der Stoßfänger 200 ist nur ausschnittsweise dargestellt. Der elektroakustische Wandler 100 umfasst ein Gehäuse 180, eine schwingende Struktur umfassend mindestens ein scheibenförmiges piezoelektrisches Element 150 aus einer Piezokeramik, das eine erste und eine zur ersten parallele zweite Oberfläche 151, 152 aufweist. Weiterhin umfasst die schwingende Struktur einen akustischen Übertrager 140, der in diesem Beispiel einen Stab 143 und eine Scheibe 145 umfasst. Der akustische Übertrager ist zum Beispiel aus einem Metall wie Aluminium oder Messing oder einem steifen Kunststoff wie zum Beispiel einem Epoxidharz ausgebildet. Es sind weiterhin elektrische Verbindungsmittel zur Kontaktierung der Elektroden des piezoelektrischen Elements 150 vorgesehen, die jedoch aus Gründen der Übersichtlichkeit hier nicht dargestellt sind. Der Stab 143 weist eine erste Oberfläche 141 mit einem Durchmesser b₁ auf, die mit der ersten Oberfläche 151 des piezoelektrischen Elements 150 verbunden ist, beispielsweise durch einen Klebstoff. An seinem dem piezoelektrische Element 150 abgewandten Ende weist der Stab 143 eine Scheibe 145 mit einem größeren Durchmesser b₂ auf. Eine zweite Oberfläche 142' des akustischen Übertragers 140 bzw. der Scheibe 145 ist an eine Innenfläche 212 des Stoßfängers 200 angebunden, wobei der Stoßfänger 200 in diesem Anbindungsbereich 210 eine verringerte Dicke D aufweist. Der Bereich 210 kann somit schwingen und auf den Rest des Stoßfängers überträgt sich nur ein geringer Körperschall-Anteil. Die nach außen gewandte Oberfläche 142 des Bereichs 210 ist demnach geeignet Schallwellen abzustrahlen oder zu empfangen. Die schwingende Struktur umfasst demnach das piezoelektrische Element 150, den akustischen Übertrager 140 aus dem Stab 143 und der Platte 145, und den Bereich 210 des Stoßfängers 200 und ist als λ/4-Dickenschwinger ausgelegt. Mit anderen Worten entspricht der Abstand d, gemessen von der Oberfläche 142 zur zweiten Oberfläche 152 des piezoelektrischen Elements 152 im Wesentlichen ¼ der Wellenlänge λ einer Resonanzschwingung der schwingenden Struktur.

Die Form des Querschnitts des Stabs 143 kann frei gewählt werden, beispielsweise kreisrund, elliptisch, rechteckig. Auch können die Querschnittsformen des piezoelektrischen Elements 150, des Stabs 143 und der Platte 145 unterschiedlich zueinander sein. Weiterhin ist das Verhältnis der Durchmesser b₁/b₂ frei wählbar. Durch die Wahl der Dimension b₂ ist sowohl die Abstrahlcharakteristik (Richtcharakteristik der Schallabstrahlung und des Schallempfanges) als auch die Resonanzfrequenz des λ/4-Schwingers einstellbar. Die Dicke der Platte 145 beeinflusst diese ebenso. Die Platte 145 und der Stab 143 können beispielsweise getrennt gefertigt werden und im Anschluss durch ein geeignetes Fügeverfahren, wie z.B. Kleben, Schweißen oder Schrauben, vereint werden.

Das Gehäuse 180 ist in diesem Beispiel topfförmig ausgestaltet und weist bevorzugt eine hohe akustische Impedanz auf, weist also eine hohe Steifigkeit und/oder Masse auf.

Die erfindungsgemäße Befestigung oder Anbindung des piezoelektrischen Elements 150 an das Gehäuse 180, genauergesagt an die Gehäuseinnenfläche 185, mittels einer geeigneten Lagerstruktur 170 (hier nur schematisch dargestellt), kann auf verschiedene Weise realisiert werden. Die Gemeinsamkeit liegt in einer möglichst geringen Behinderung der Querdehnung. Im Folgenden werden verschiedene Möglichkeiten zur Ausbildung der Lagerstruktur 170 genauer beschrieben.

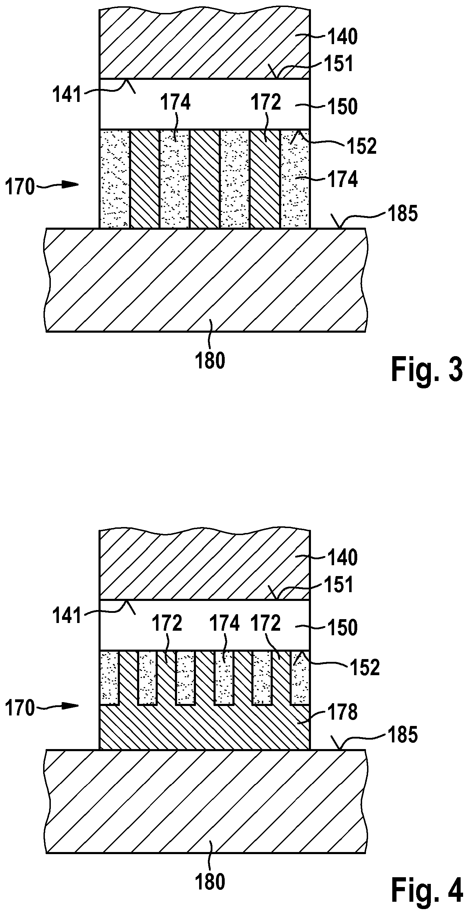

In Abbildung 3 ist eine Ausführung der erfindungsgemäßen Lagerstruktur 170 im Detail dargestellt. In dieser Ausführung umfasst die Lagerstruktur 170 mehrere stäbchenförmige Abstützelemente 172, die parallel zueinander angeordnet sind und sich zwischen der zweiten Oberfläche 152 des piezoelektrischen Elements 150 und dem Gehäuse 180 bzw. der Gehäuseinnenfläche 185 erstrecken. Die Abstützelemente 172 verhindern eine Verschiebung der schwingenden Struktur in Dickenrichtung und ermöglichen durch ihre geringe Steifigkeit in Querrichtung eine Querdehnung des piezoelektrischen Elements 150. Damit die Abstützelemente 172 regelmäßig angeordnet werden können, werden sie mit einem Füllmaterial 174 ummantelt, das insbesondere die Zwischenräume zwischen den Stäbchen ausfüllt. Als Material für die Abstützelemente 172 können Metalle, Keramiken und Kunststoffe gewählt werden. Das Füllmaterial 174 ist vorzugsweise ein nachgiebiger Werkstoff, wie z.B. ein Polymer oder ein Schaum.

Figur 4 zeigt ein nicht erfindungsgemäßes Beispiel einer Lagerstruktur 170. Auch hier sind stäbchenförmige Abstützelemente 172, die parallel zueinander angeordnet sind vorgesehen. Die Abstützelemente 172 sind auf einer gemeinsamen Platte 178, die als Basiselement für die Abstützelemente 172 dient, angeordnet. Die Abstützelemente 172 können bevorzugt einteilig mit der Platte 178 ausgebildet sein. Die Platte 178 ist bevorzugt aus einem Metall oder einer Keramik ausgeführt und beispielsweise durch Kleben oder Schweißen an dem Gehäuse 180 befestigt. Es ist ebenfalls denkbar, die Platte 178 und/oder die Abstützelemente 172 direkt einteilig mit dem Gehäuse 180 auszubilden.

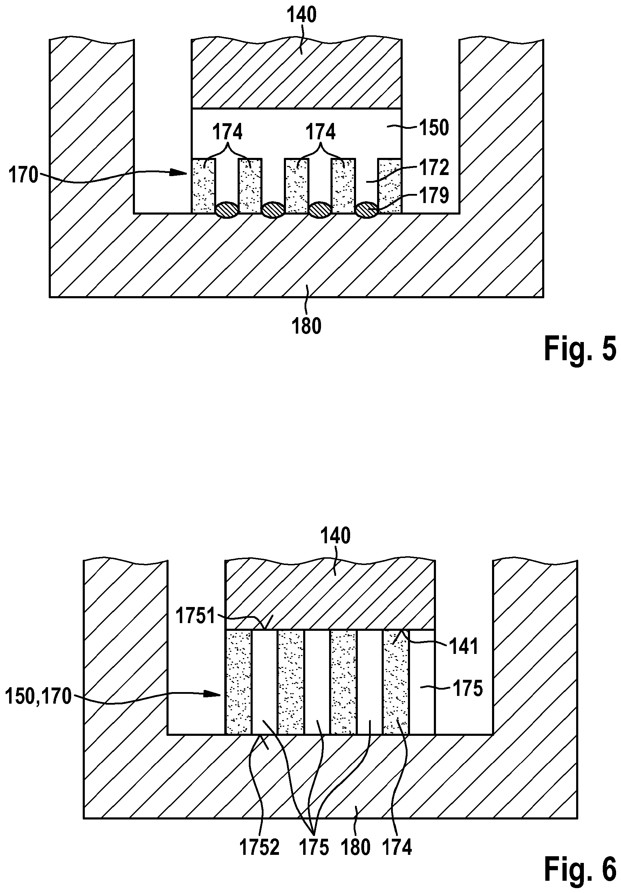

In Figur 5 ist ein weiteres nicht erfindungsgemäßes Beispiel einer Lagerstruktur 170 dargestellt. Auch in diesem Ausführungsbeispiel umfasst die Lagerstruktur 170 mehrere stäbchenförmige Abstützelemente 172, die mit einem Füllmaterial 174 ummantelt sind. Im Unterschied zu den bereits beschriebenen nicht erfindungsgemäßen Beispielen und Ausführungsformen sind die Abstützelement 172 hier jedoch einteilig mit dem piezoelektrischen Element 150 ausgebildet. Dadurch ergibt sich die Möglichkeit, das piezoelektrische Element unmittelbar über das, in diesem Fall metallische, Gehäuse 180 elektrisch zu kontaktieren. Dazu werden die Stirnflächen der Abstützelemente 172 mittels eines elektrisch leitfähigen Klebstoffs 179 mit dem Gehäuse 180 mechanisch und elektrisch verbunden. Es sind daher keine zusätzlichen elektrischen Leitungen nötig.

In Figur 5 ist eine weitere Variante eines nicht erfindungsgemäßen Beispiels einer Lagerstruktur 170 dargestellt. Hierbei wird ein piezoelektrisches Element 150 vorgesehen, dass aus einer Mehrzahl von parallel angeordneten stäbchenförmige Elementen 175 aufgebaut ist, die ein piezoelektrisch aktives Material, wie beispielsweise eine Piezokeramik, umfassen. Die stäbchenförmigen Elemente 175 sind derart ausgerichtet, dass sie sich zwischen der ersten Oberfläche 141 des akustischen Übertragers 140 und dem Gehäuse 180 erstrecken. Die stäbchenförmigen Elemente 175 sind in ein nachgiebiges Material 174 eingebettet, so dass eine Behinderung der Querdehnung der einzelnen stäbchenförmigen Elemente 175 vermieden wird. Das piezoelektrische Element 150 bildet demnach selbst die Lagerstruktur 170 aus.

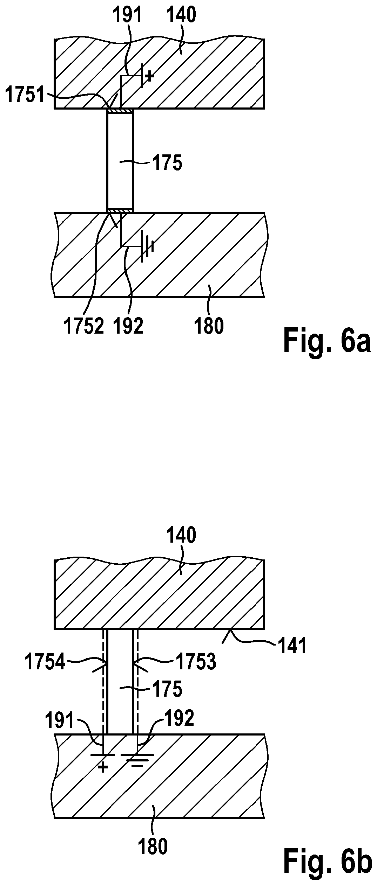

Wie in den Figuren 6a) und 6b) im Detail dargestellt kann die elektrische Kontaktierung eines derartig aufgebauten piezoelektrischen Elements 150 auf zwei Arten realisiert werden. Der besseren Übersicht halber ist in den Figuren 6a) und 6b) jeweils nur ein einzelnes stäbchenförmiges Element 175 beispielhaft gezeigt. Jedes stäbchenförmige Element 175 weist jeweils eine erste und eine zweite Stirnfläche 1751, 1752 auf. Die ersten Stirnflächen 1751 sind mit der ersten Oberfläche 141 des akustischen Übertragers 140 verbunden. Die zweiten Stirnflächen 1752 sind mit dem Gehäuse 180 verbunden. Eine elektrische Kontaktierung 191, 192 kann entweder über die Stirnflächen 1751, 1752 erfolgen, wie in Figur 6a) dargestellt, oder über zwei Mantelflächen 1753, 1754, wie in Figur 6b) gezeigt. Bei den gezeigten unterschiedlichen Kontaktierungsmöglichkeiten werden die unterschiedlichen Schwingeigenschaften des piezoelektrischen Elements 150 anders als elektrisches Ausgangssignal gewandelt. Bei der Anordnung der Elektroden an den Stirnflächen 1751 und 1752 wird der sogenannte d33-Effekt ausgenutzt, das heißt, das elektrische Feld und die Bewegungsrichtung der Schwingung sind parallel ausgerichtet. Bei der Anordnung der Elektroden an den Mantelflächen 1753 und 1754 wird der d31-Effekt ausgenutzt, das heißt das elektrische Feld und die Bewegungsrichtung der Schwingung sind senkrecht zueinander ausgerichtet. In Abhängigkeit des gewählten piezoelektrischen Materials kann der d33-Effekt oder d31-Effekt größer sein.

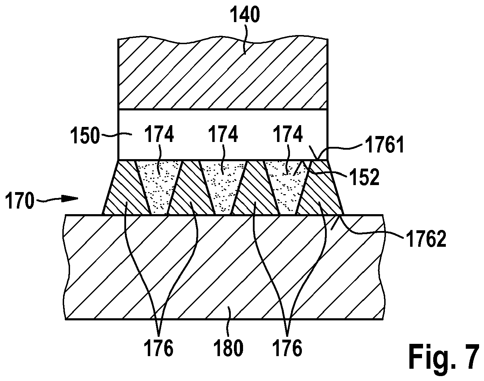

In Figur 7 ist ein weiteres Beispiel einer nicht erfindungsgemäßen Lagerstruktur 170 gezeigt. Dieses nicht erfindungsgemäße Beispiel entspricht weitgehend dem Ausführungseispiel aus Figur 3. Sie weist jedoch den wesentlichen Unterschied auf, dass die Abstützelemente 176 hier nicht stäbchenförmig, sondern kegelstumpfartig ausgeführt. Dabei ist die jeweilige Grundfläche 1762 des Kegelstumpfs, also die größere Fläche, mit dem Gehäuse 180 verbunden und die jeweilige Deckfläche 1761 ist mit der zweiten Oberfläche 152 des piezoelektrischen Elements 150 verbunden. Auf diese Weise wird die Querdehnung des piezoelektrischen Elements so geringfügig wie möglich behindert und trotzdem eine haltbare mechanische Verbindung der Abstützelemente zum Gehäuse geschaffen.

## Patentansprüche

1. Elektroakustischer Wandler (100), umfassend
ein Gehäuse (180), eine schwingende Struktur umfassend mindestens ein scheibenförmiges piezoelektrisches Element (150) mit einer ersten und einer zweiten Oberfläche (151, 152) und einen akustischen Übertrager (140),
und elektrische Verbindungsmittel zur Kontaktierung der Elektroden des piezoelektrischen Elements (150),
wobei der akustische Übertrager (140) eine erste Oberfläche (141) und eine zu der ersten Oberfläche parallele zweite Oberfläche (142) aufweist und wobei die erste Oberfläche (141) des akustischen Übertragers (140) mit der ersten Oberfläche (151) des piezoelektrischen Elements (150) verbunden ist und die zweite Oberfläche (142) des akustischen Übertragers (140) geeignet ist, Schallwellen abzustrahlen und/oder zu empfangen,
und wobei der Abstand (d) zwischen der zweiten Oberfläche (142) des akustischen Übertragers (140) und der zweiten Oberfläche (152) des piezoelektrischen Elements (150) im Wesentlichen ¼ der Wellenlänge λ einer Resonanzschwingung der schwingenden Struktur entspricht,
wobei das piezoelektrische Element (150) mittels einer Lagerstruktur (170) mit dem Gehäuse (180) verbunden ist,
**dadurch gekennzeichnet, dass** die Lagerstruktur (170) ausgebildet ist, Querdehungen des piezoelektrischen Elements (150) zu ermöglichen, wobei die Lagerstruktur (170) dazu mehrere stäbchenförmige, Abstützelemente (172) umfasst, die sich zwischen der zweiten Oberfläche (152) des piezolelektrischen Elements (150) und einer Gehäuseinnenfläche (185) des Gehäuses erstrecken, und wobei die Abstützelemente eine Verschiebung der schwingenden Struktur in Dickenrichtung verhindern und eine geringe Steifigkeit in Querrichtung aufweisen.

2. Elektroakustischer Wandler (100) nach Anspruch 1, **dadurch gekennzeichnet, dass** die Abstützelementen (172) mit einem Füllmaterial (174) ummantelt sind, das insbesondere ein nachgiebiges Material, insbesondere ein Schaum oder ein Polymer aufweist.

3. Elektroakustischer Wandler (100) nach einem der Ansprüche 1 oder 2, **dadurch gekennzeichnet, dass** die Abstützelemente (172) einteilig mit dem piezoelektrischen Element (150) ausgebildet sind.

4. Elektroakustischer Wandler (100) nach Anspruch 3, **dadurch gekennzeichnet, dass** die Abstützelemente (172) mittels eines elektrisch leitfähigen Klebstoffs (179) mit dem Gehäuse (180) verbunden sind.

5. Elektroakustischer Wandler (100) nach einem der Ansprüche 1 oder 2, **dadurch gekennzeichnet, dass** die Lagerstruktur (170) ein Basiselement (178) aufweist, das an dem Gehäuse (180) befestigt ist und auf dem die Abstützelemente (172) angeordnet sind.

6. Elektroakustischer Wandler (100) nach Anspruch 1, **dadurch gekennzeichnet, dass** das piezoelektrische Element (150) mehrere stäbchenförmige Elemente (175) umfasst, die jeweils zueinander parallele Stirnflächen (1751, 1752) aufweisen, wobei jeweils eine erste Stirnfläche (1751) mit der ersten Oberfläche (141) des akustischen Übertragers (140) und eine zweite Stirnfläche (1752) mit dem Gehäuse (180) verbunden ist, wodurch das piezoelektrische Element (150) die Lagerstruktur (170) ausbildet.

7. Elektroakustischer Wandler (100) nach Anspruch 6, **dadurch gekennzeichnet, dass** die elektrischen Verbindungsmittel (191, 192) an den Stirnflächen (1751, 1752) der stäbchenförmige Elemente (175) kontaktiert sind.

8. Elektroakustischer Wandler (100) nach Anspruch 6, **dadurch gekennzeichnet, dass** die elektrischen Verbindungsmittel (191, 192) an gegenüberliegenden Mantelflächen (1753, 1754) der der stäbchenförmige Elemente (175) kontaktiert sind.

9. Elektroakustischer Wandler (100) nach einem der Ansprüche 2 bis 8, **dadurch gekennzeichnet, dass** die Abstützelemente konisch oder kegelstumpfartig geformt sind.

10. Elektroakustischer Wandler (100) nach einem der Ansprüche 1 bis 8, **dadurch gekennzeichnet, dass** die erste Oberfläche (141) des akustischen Übertragers (140) und die zweite Oberfläche (142) des akustischen Übertragers (140) ungleich groß und/oder ungleich geformt sind.

11. Elektroakustischer Wandler (100) nach Anspruch 9, **dadurch gekennzeichnet, dass** die erste Oberfläche (141) des akustischen Übertragers (140) im Wesentlichen kreisförmig ausgebildet ist und die zweite Oberfläche (142) des akustischen Übertragers (140) im Wesentlichen rechteckig ausgebildet ist.

12. Elektroakustischer Wandler (100) nach Anspruch 9, **dadurch gekennzeichnet, dass** die erste und die zweite Oberfläche (141, 142) des akustischen Übertragers (140) jeweils im Wesentlichen kreisförmig ausgebildet sind, wobei der Durchmesser der ersten Oberfläche (141) kleiner oder größer ist als der Durchmesser der zweiten Oberfläche (142).

13. Anordnung (20) umfassend einen elektroakustischer Wandler (100) nach einem der Ansprüche 1 bis 12 und ein Verkleidungselement (200) eines Fahrzeugs, insbesondere einen Stoßfänger, **dadurch gekennzeichnet, dass** der elektroakustischer Wandler (100) derart an einer Innenfläche (212) des Verkleidungselements (200) befestigt ist, dass der elektroakustische Wandler (100) von außen unsichtbar ist und dass die zweite Oberfläche (142) des akustischen Übertragers (140) akustisch an einen Bereich (210) des Verkleidungselements (200) gekoppelt ist, wobei das Verkleidungselement (200) in diesem Bereich (210) eine verringerte Dicke (D) aufweist.

14. Anordnung (20) nach Anspruch 13, **dadurch gekennzeichnet, dass** das Verkleidungselement (200) in dem Bereich (210) eine Dicke (D) zwischen 0,1 und 10 mm aufweist.

15. Anordnung nach einem der Ansprüche 13 oder 14, **dadurch gekennzeichnet, dass** das Gehäuse (180) des elektroakustischen Wandlers (100) durch Schweißen oder Kleben oder Schrauben an der Innenfläche (212) des Verkleidungselements (200) befestigt ist.

## Claims

1. Electroacoustic transducer (100), comprising
a housing (180), an oscillating structure comprising at least one disc-like piezoelectric element (150) with a first and a second surface (151, 152) and comprising an acoustic transmitter (140),
and electrical connecting means for contacting the electrodes of the piezoelectric element (150), wherein the acoustic transmitter (140) has a first surface (141) and a second surface (142) parallel to the first surface, and wherein the first surface (141) of the acoustic transmitter (140) is connected to the first surface (151) of the piezoelectric element (150) and the second surface (142) of the acoustic transmitter (140) is suitable for emitting and/or for receiving sound waves,
and wherein the distance (d) between the second surface (142) of the acoustic transmitter (140) and the second surface (152) of the piezoelectric element (150) substantially corresponds to ¼ of the wavelength λ of a resonant oscillation of the oscillating structure,
wherein the piezoelectric element (150) is connected to the housing (180) by means of a bearing structure (170),
**characterized in that** the bearing structure (170) is designed to allow transverse expansion of the piezoelectric element (150),
wherein for this purpose the bearing structure (170) comprises a plurality of rod-like supporting elements (172) which extend between the second surface (152) of the piezoelectric element (150) and a housing inner face (185) of the housing, and wherein the supporting elements prevent displacement of the oscillating structure in the thickness direction and have a low stiffness in the transverse direction.

2. Electroacoustic transducer (100) according to Claim 1, **characterized in that** the supporting elements (172) are encased by a filler material (174) which comprises, in particular, a soft material, in particular a foam or a polymer.

3. Electroacoustic transducer (100) according to either of Claims 1 and 2, **characterized in that** the supporting elements (172) are formed in one piece with the piezoelectric element (150).

4. Electroacoustic transducer (100) according to Claim 3, **characterized in that** the supporting elements (172) are connected to the housing (180) by means of an electrically conductive adhesive (179).

5. Electroacoustic transducer (100) according to either of Claims 1 and 2, **characterized in that** the bearing structure (170) has a base element (178) which is fastened to the housing (180) and on which the supporting elements (172) are arranged.

6. Electroacoustic transducer (100) according to Claim 1, **characterized in that** the piezoelectric element (150) comprises a plurality of rod-like elements (175) which each have end faces (1751, 1752) parallel to one another, wherein in each case a first end face (1751) is connected to the first surface (141) of the acoustic transmitter (140) and a second end face (1752) is connected to the housing (180), as a result of which the piezoelectric element (150) forms the bearing structure (170).

7. Electroacoustic transducer (100) according to Claim 6, **characterized in that** the electrical connecting means (191, 192) are contacted at the end faces (1751, 1752) of the rod-like elements (175).

8. Electroacoustic transducer (100) according to Claim 6, **characterized in that** the electrical connecting means (191, 192) are contacted at opposite lateral faces (1753, 1754) of the rod-like elements (175).

9. Electroacoustic transducer (100) according to one of Claims 2 to 8, **characterized in that** the supporting elements are of conical or truncated cone-like shape.

10. Electroacoustic transducer (100) according to one of Claims 1 to 8, **characterized in that** the first surface (141) of the acoustic transmitter (140) and the second surface (142) of the acoustic transmitter (140) are of different size and/or different shape.

11. Electroacoustic transducer (100) according to Claim 9, **characterized in that** the first surface (141) of the acoustic transmitter (140) is of substantially circular design and the second surface (142) of the acoustic transmitter (140) is of substantially rectangular design.

12. Electroacoustic transducer (100) according to Claim 9, **characterized in that** the first and the second surface (141, 142) of the acoustic transmitter (140) are each of substantially circular design, wherein the diameter of the first surface (141) is smaller than or larger than the diameter of the second surface (142).

13. Arrangement (20) comprising an electroacoustic transducer (100) according to one of Claims 1 to 12 and a trim element (200) of a vehicle, in particular a bumper, **characterized in that** the electroacoustic transducer (100) is fastened to an inner face (212) of the trim element (200) in such a way that the electroacoustic transducer (100) is not visible from the outside, and **in that** the second surface (142) of the acoustic transmitter (140) is acoustically coupled to a region (210) of the trim element (200), wherein the trim element (200) has a reduced thickness (D) in this region (210).

14. Arrangement (20) according to Claim 13, **characterized in that** the trim element (200) has a thickness (D) of between 0.1 and 10 mm in the region (210) .

15. Arrangement according to either of Claims 13 and 14, **characterized in that** the housing (180) of the electroacoustic transducer (100) is fastened to the inner face (212) of the trim element (200) by welding or adhesive bonding or screw-connection.

## Revendications

1. Convertisseur électroacoustique (100), comprenant
un boîtier (180), une structure vibrante comprenant au moins un élément piézoélectrique (150) en forme de disque pourvu d'une première et d'une deuxième surface (151, 152), et un transducteur acoustique (140),
et des moyens de liaison électrique servant à la mise en contact des électrodes de l'élément piézoélectrique (150),
le transducteur acoustique (140) présentant une première surface (141) et une deuxième surface (142) parallèle à la première surface, et la première surface (141) du transducteur acoustique (140) étant reliée à la première surface (151) de l'élément piézoélectrique (150), et la deuxième surface (142) du transducteur acoustique (140) étant adaptée pour émettre et/ou recevoir des ondes sonores,
et la distance (d) entre la deuxième surface (142) du transducteur acoustique (140) et la deuxième surface (152) de l'élément piézoélectrique (150) correspondant substantiellement à 1/4 de la longueur d'onde λ d'une vibration de résonance de la structure vibrante, l'élément piézoélectrique (150) étant relié au boîtier (180) au moyen d'une structure de palier (170),
**caractérisé en ce que** la structure de palier (170) est réalisée pour permettre des dilatations transversales de l'élément piézoélectrique (150), la structure de palier (170) comprenant à cet effet plusieurs éléments d'appui (172) en forme de baguettes qui s'étendent entre la deuxième surface (152) de l'élément piézoélectrique (150) et une surface intérieure de boîtier (185) du boîtier, et les éléments d'appui empêchant un décalage de la structure vibrante dans la direction de l'épaisseur et présentant une faible rigidité dans la direction transversale.

2. Convertisseur électroacoustique (100) selon la revendication 1, **caractérisé en ce que** les éléments d'appui (172) sont gainés d'un matériau de remplissage (174) qui présente en particulier un matériau souple, en particulier une mousse ou un polymère.

3. Convertisseur électroacoustique (100) selon l'une quelconque des revendications 1 et 2, **caractérisé en ce que** les éléments d'appui (172) sont réalisés d'un seul tenant avec l'élément piézoélectrique (150).

4. Convertisseur électroacoustique (100) selon la revendication 3, **caractérisé en ce que** les éléments d'appui (172) sont reliés au boîtier (180) au moyen d'un adhésif (179) électriquement conducteur.

5. Convertisseur électroacoustique (100) selon l'une quelconque des revendications 1 et 2, **caractérisé en ce que** la structure de palier (170) présente un élément de base (178) qui est fixé au boîtier (180) et sur lequel sont disposés les éléments d'appui (172).

6. Convertisseur électroacoustique (100) selon la revendication 1, **caractérisé en ce que** l'élément piézoélectrique (150) comprend plusieurs éléments en forme de baguettes (175) qui présentent respectivement des surfaces frontales (1751, 1752) parallèles les unes aux autres, respectivement une première surface frontale (1751) étant reliée à la première surface (141) du transducteur acoustique (140) et une deuxième surface frontale (1752) étant reliée au boîtier (180), de sorte que l'élément piézoélectrique (150) réalise la structure de palier (170).

7. Convertisseur électroacoustique (100) selon la revendication 6, **caractérisé en ce que** les moyens de liaison électrique (191, 192) sont mis en contact au niveau des surfaces frontales (1751, 1752) des éléments en forme de baguettes (175).

8. Convertisseur électroacoustique (100) selon la revendication 6, **caractérisé en ce que** les moyens de liaison électrique (191, 192) sont mis en contact au niveau de surfaces latérales opposées (1753, 1754) des éléments en forme de baguettes (175).

9. Convertisseur électroacoustique (100) selon l'une quelconque des revendications 2 à 8, **caractérisé en ce que** les éléments d'appui sont façonnés de manière conique ou tronconique.

10. Convertisseur électroacoustique (100) selon l'une quelconque des revendications 1 à 8, **caractérisé en ce que** la première surface (141) du transducteur acoustique (140) et la deuxième surface (142) du transducteur acoustique (140) sont de taille différente et/ou de forme différente.

11. Convertisseur électroacoustique (100) selon la revendication 9, **caractérisé en ce que** la première surface (141) du transducteur acoustique (140) est réalisée de manière substantiellement circulaire et la deuxième surface (142) du transducteur acoustique (140) est réalisée de manière substantiellement rectangulaire.

12. Convertisseur électroacoustique (100) selon la revendication 9, **caractérisé en ce que** la première et la deuxième surface (141, 142) du transducteur acoustique (140) sont réalisées respectivement de manière substantiellement circulaire, le diamètre de la première surface (141) étant inférieur ou supérieur au diamètre de la deuxième surface (142).

13. Agencement (20), comprenant un convertisseur électroacoustique (100) selon l'une quelconque des revendications 1 à 12 et un élément d'habillage (200) d'un véhicule, en particulier un pare-chocs,
**caractérisé en ce que** le convertisseur électroacoustique (100) est fixé sur une surface intérieure (212) de l'élément d'habillage (200) de telle sorte que le convertisseur électroacoustique (100) est invisible de l'extérieur, et **en ce que** la deuxième surface (142) du transducteur acoustique (140) est couplée acoustiquement à une zone (210) de l'élément d'habillage (200), l'élément d'habillage (200) présentant dans cette zone (210) une épaisseur réduite (D).

14. Agencement (20) selon la revendication 13, **caractérisé en ce que** l'élément d'habillage (200) présente dans la zone (210) une épaisseur (D) comprise entre 0,1 et 10 mm.

15. Agencement selon l'une quelconque des revendications 13 et 14, **caractérisé en ce que** le boîtier (180) du convertisseur électroacoustique (100) est fixé par soudage ou collage ou vissage à la surface intérieure (212) de l'élément d'habillage (200).
